# EUROPEAN PATENT SPECIFICATION

(11) **EP 2 502 720 B1**
(45) Date of publication and mention of the grant of the patent: **06.05.2015**
(21) Application number: 12160424.3
(22) Date of filing: 20.03.2012
(51) Int. Cl.: B27C 5/10, B23Q 9/00

(54) **Power tool**
Elektrowerkzeug
Outil électrique

(30) Priority: 22.03.2011 JP 2011062370
(43) Date of publication of application: 26.09.2012
(73) Proprietor: Makita Corporation, Anjo, Aichi 446-8502 (JP)
(72) Inventor: Kato, Kazuya, Anjo,, Aichi 446-8502 (JP); Kimura, Takuji, Anjo,, Aichi 446-8502 (JP); Abe, Kenji, Anjo,, Aichi 446-8502 (JP)
(74) Representative: Kramer Barske Schmidtchen Patentanwälte PartG mbB

(56) References cited:
- US-A- 4 044 805
- US-A- 4 696 331
- US-A- 4 827 996
- US-A- 5 685 676
- US-A- 5 725 038
- US-A1- 2002 020 466
- US-A1- 2005 081 954
- US-A1- 2005 139 288
- US-A1- 2006 191 595
- US-B1- 6 846 138

## Description

The present invention relates to power tools, such as those known as trimmers or routers that may be used for trimming or grooving mainly wooden workpieces as they are moved along edges of the workpieces.

US 2006/0191595 A1 discloses a hovering router base. US 2002/0020466 A1 discloses an apparatus according to the preamble of claim 1.

A known trimmer has a cylindrical tubular unit support member for supporting a tool unit, and a base assembly mounted to the lower surface of the unit support member and having a base for contacting with an upper surface of a workpiece. A base mount is provided integrally with the lower portion of the unit support member. The base is mounted to the base mount so as to contact the base mount in a face-to-face contact manner. The tool unit may be also called a motor unit and has an electric motor disposed therein. The electric motor serves as a drive source. The tool unit has a spindle rotatably driven by the electric motor and protruding downward from the tool unit. A working tool called a bit may be mounted to the spindle.

Typically, the base mount has an annular shape and is provided at the lower portion of the cylindrical tubular unit support member. Therefore, the base having an annular shape (circular shape) corresponding to the shape of the base mount is used. A tiltable base assembly and an offset base assembly may be used for special machining operations. The tiltable base assembly has a function of supporting the unit support member such that the unit support member is tiltable relative to a workpiece with which the base may contact, and the base normally has a rectangular shape. The offset base assembly may be used for efficiently perform an edge cutting operation at a position adjacent to a wall of a building or the like by a working tool that is mounted to an offset shaft positioned to be offset from the spindle of the tool unit. A base having a large area, such as a fan-shaped base, is used in the offset base assembly.

As described above, as the base for contacting with a workpiece, there have been provided differently shaped bases that can be selectively used depending on a machining work to be performed.

According to the present invention there is provided a power tool according to claim 1.

Additional objects, features, and advantages, of the present invention will be readily understood after reading the following detailed description together with the claims and the accompanying drawings, in which:
FIG 1 is a front view of a trimmer having an annular base mounted thereto;
FIG 2 is a perspective view of a base assembly of the trimmer having the annular base as viewed from the front side;
FIG 3 is a perspective view of the base assembly of the trimmer having the annular base as viewed from the rear side;
FIG 4 is a perspective view of the annular base;
FIG 5 is a bottom view of the annular base as viewed in a direction indicated by arrow (V) in FIG 4;
FIG 6 is a perspective view of the base assembly having a rectangular base mounted thereto;
FIG 7 is a perspective view of the base assembly having an offset base mounted thereto;
FIG 8 is a perspective view of a trimmer having a tiltable base assembly mounted thereto;
FIG. 9 is a perspective view of a trimmer having an offset base assembly mounted thereto;
FIG. 10 is a perspective view of the offset base as viewed from the upper side;
FIG. 11 is a bottom view of the offset base as viewed in a direction indicated by arrow (XI) in FIG 10;
FIG. 12 is a perspective view of the base assembly having the offset base to which an auxiliary grip is mounted; and
FIG. 13 is a side view, with a part broken away, of the offset base and an attachment mounted to the offset base as viewed in a direction indicated by arrow (XIII) in FIG. 12.

Representative examples of the present invention will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

The bases include a base with an auxiliary grip that can be grasped by an operator. With this arrangement, the operator can grasp the auxiliary grip for moving the power tool. Therefore, the machining operation can be easily performed.

The base with the auxiliary grip is a base used for an offset base assembly. With this arrangement, it is possible to mount the offset base to the unit support member that may be used for a normal cutting operation with the working tool mounted to the spindle.

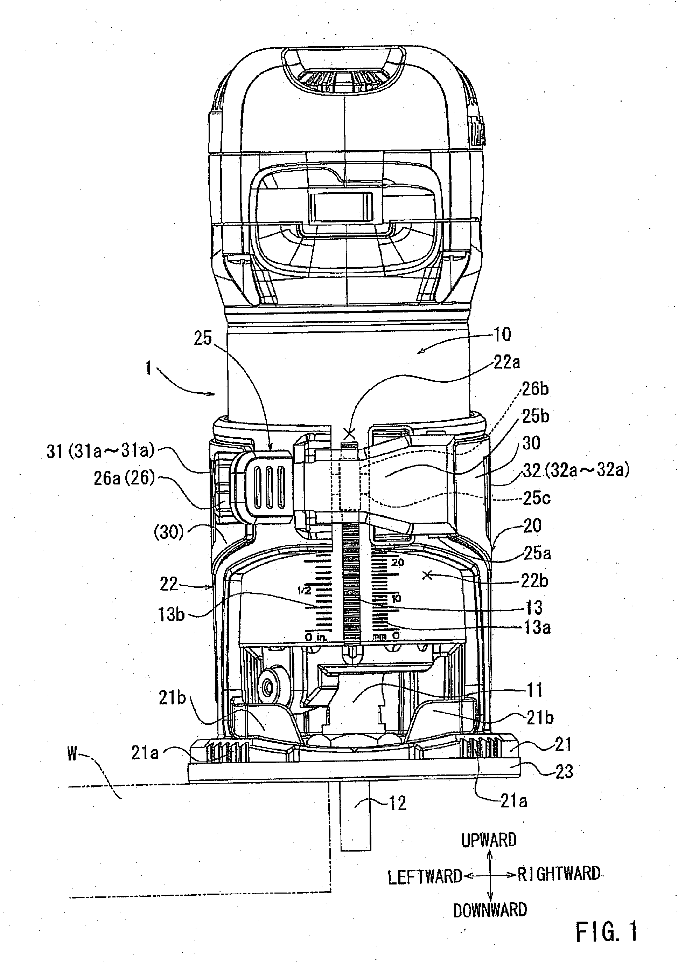

A representative example will now be described with reference to the drawings. Referring to FIG. 1, a trimmer 1 generally includes a tool unit 10 and a base assembly 20. The tool unit 10 has an electric motor (not shown) disposed therein. The base assembly 20 is configured to support the tool unit 10 relative to a workpiece W

The tool unit 10 generally has a cylindrical configuration and has a spindle 11 protruding downwardly from the tool unit 10. A working tool 12 is mounted to the spindle 11.

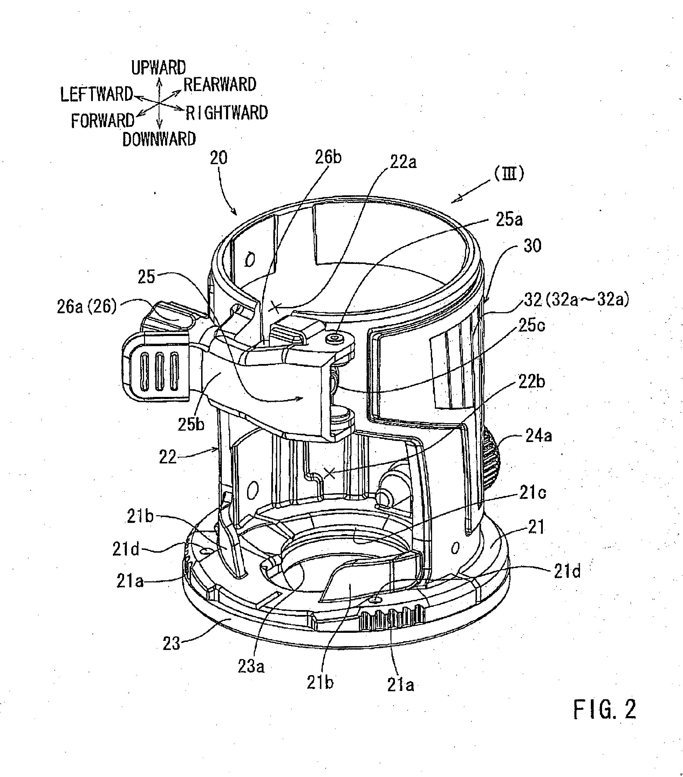

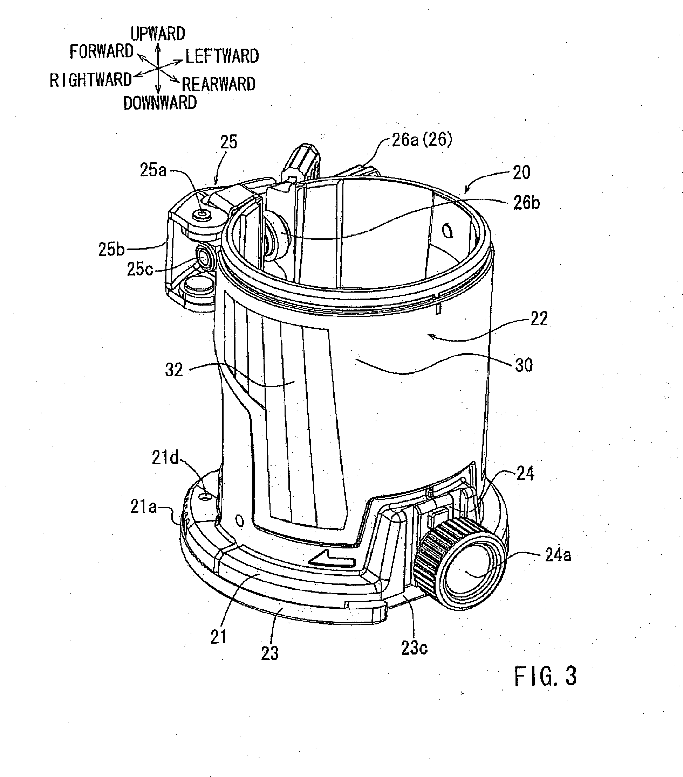

As shown in FIGS. 2 and 3, the base assembly 20 includes a cylindrical tubular unit support member 22 and an annular base 23. The annular base 23 is adapted to contact with an upper surface of the workpiece W The tool unit 10 is inserted into the tool support member 22 so as to be held therewithin. The working tool 12 protrudes downward from the annular base 23. In order to perform a trimming operation of the workpiece W, the trimmer 1 may be moved along an edge portion of the workpiece W with the working tool 12 pressed against the edge portion of the workpiece W

A base mount 21 is provided integrally with the lower portion of the unit support member 22. The annular base 23 is mounted to the base mount 21 in such a manner that that the annular base 23 contacts the lower surface of the mount base 21 in a face-to-face contact manner therewith. The base mount 21 has an annular shape and has a relief hole 21c formed centrally of the base mount 21. The relief hole 21c serves to allow passage of the working tool 12 of the tool unit 10 in a vertical direction from its upper side. More specifically, the upper surface of the annular base 23 is in contact with the entire lower surface of the annular mount base 21. The annular base 23 can be removed from the base mount 21 for replacement with another base having a different configuration as will be described later.

The unit support member 22 extends upwardly from the upper surface of the base mount 21. In this example, the base mount 21 and the unit support member 22 are formed integrally with each other. For example, the base mount 21 and the unit support member 22 may be formed of a die-cast product made from aluminum.

In order to move the trimmer 1 along the workpiece W, the operator may grasp a head portion (upper portion) of the tool unit 10 or the unit support member 22 with one hand and may hold the base mount 21 with the other hand and press the base mount 21 downward against the workpiece W, so that the position of the trimmer 1 relative to the workpiece W can be controlled. Therefore, the unit support member 22 also serves as a grip portion to be grasped by the operator in addition to the function of supporting the tool unit 10.

The front portion of the unit support member 22 includes a slit 22a formed in its upper part and a window 22b formed in the lower part in continuity with the slit 22a. Therefore, the unit support member 22 has a C-shaped in the horizontal cross section and has a resiliency in a direction of enlarging and decreasing its diameter. A clamp device 25 is provides on the unit support member 22 at a position adjacent to the slit 22a. The clamp device 25 has a lever 25b that can be pivoted in the left and right directions about a support shaft 25a. When the lever 25b is pivoted to an unclamp position (right side position) from a clamp position shown in FIG 2, an action of a cam portion (not shown) provided on a clamp rod 25c is released, so that the unit support member 22 resiliently deforms (recovers) to enlarge its diameter to increase the width of the slit 22a. Therefore, the tool unit 10 can be moved in the vertical direction relative to the unit support member 22. Hence, the tool unit 10 can be withdrawn upwardly from the unit support member 22. When the lever 25b is pivoted from the unclamp position to the claim position, due to the cam action of the clamp rod 25c, the unit support member 22 is deformed to decrease its diameter against the resilient force and to decrease the width of the slit 22a. Therefore, the tool unit 10 can be firmly clamped by the unit support member 22.

An adjusting mechanism 26 is provided in association with the clamp device 25. The adjusting mechanism 26 includes an adjusting dial 26a mounted to one end of the clamp rod 25c and an adjustment gear 26b mounted to the clamp rod 25c at a position of the slit 22a as shown in FIG 3. As the adjustment dial 26a is rotated, the adjustment gear 26b rotates with the clamp rod 25c. As shown in FIG. 1, the adjustment gear 26b engages a rack 14 attached to a lateral side of the tool unit 10. The rack 14 extends in the vertical direction along the lateral side of the tool unit 10. Scales 13a and 13b are marked on or attached to the right side and the left side of the rack 14, respectively, of the tool unit 10 at positions where the tool unit 10 is positioned within the base assembly 20. The scales 13a and 13b can provide indication of a protruding distance of the working tool 12 from the annular base 23. As the adjusting dial 26a is rotated in the state where the clamp device 25 is in the unclamp position, the tool unit 10 can be moved vertically through engagement of the adjusting gear 20b with the rack 14. After adjustment of the vertical position of the tool unit 10 relative to the unit support member 22 through engagement of the adjusting gear 26b with the rack 13, the lever 25b is pivoted to the clamp position, so that the tool unit 10 can be clamped at the vertically adjusted position.

The window 22b formed in the front portion of the unit support member 22 serves as a view window that enables the operator to view through the relief hole 21c c a region where the working tool 12 cuts into the workpiece W To this end, the window 22b has a width larger than the slit 22a with respect to the left and right direction.

The base mount 21 and the unit support member 22 of the base assembly 20 are designed to improve the grip feeling of the operator and to provide an improved slip-preventing function when grasped by the operator. Thus, right and left slip-preventing portions 21a each having alternately arranged concave portions and convex portions are provide at the front portion of the outer circumferential surface of the base mount 21. Therefore, when the operator presses the base mount 21 against the workpiece W with his or her fingers, the operator can place his or her fingers on the slip-preventing portions 21a. Hence, the slip-preventing portions 21a can provide a slip-preventing function. In this example, the slip-preventing portions 21a are positioned on the right and left sides of the front portion of the outer circumferential surface of the base mount 21 in order to cope with both of the cases where the operator presses the base mount 21 against the workpiece by using his or her right hand and where the operator presses the base mount 21 by using his or her left hand.

Left and right finger stop walls 21b are provided on the base mount 21 at positions on the rear side (radially inner side) of the slip-preventing portions 21a. The finger stop walls 21b are formed on the upper surface of the base mount 21 and are positioned at the left and right portions of the lower region of the window 22b. The finger stop walls 21b extend along the upper surface of the base mount 21 in the circumferential direction. The finger stop walls 21 b can prevent fingers of the operator, which may be used for pressing against the base mount 21, from being slid into the relief hole 21c. An elastomeric cover 30 made of elastomeric material, such as rubber and polymeric resin, may cover the outer circumferential surface of the unit support member 21. The elastomeric cover 30 has a main portion that extends over substantially half the outer circumferential surface on the rear side of the unit support member 21. The elastomeric cover 30 has right and left extensions extending leftward and rightward from the central portion at positions above the window 22b. The elastomeric cover 30 has a shape that is symmetrical with respect to a central vertical line. Mainly the palm of the operator who grasps the unit support member 21 may contact the main portion of the elastomeric cover 30, while fingers of the operator may contact the left and right side edges of the main portion and may also contact the left and right extensions. For example, the thumb may contact one of the left and right extensions, and the index finger may contact the other of the left and right extensions.

Slip-preventing portions 31 and 32 are provided on the right side region and the left side region of the elastomeric cover 30. Each of the slip-preventing portions 31 and 32 has an inverted L-shape. The slip-preventing portion 31 includes a plurality of linear projections 31a arranged in a manner like a vertically striped pattern. Similarly, the slip-preventing portion 32 includes a plurality of linear projections 32a arranged in a manner like a vertically striped pattern. Each of the liner projections 31a and 32a is tilted by a small angle such that its lower end is positioned on the rear side relative to its upper end. In most situations, moving directions of fingers of hands of the operators who grasp the unit support member 22 are obliquely downward, and directions (slipping directions) opposite to the moving directions are obliquely upward. Therefore, the inclined linear projections 31a and 32a can improve the slip-preventing function of the slip-preventing portions 31 and 32.

A ruler fixing portion 24 is provided at the lower portion of the rear surface of the unit support member 22 and is configured such that parallel ruler (not shown) can be set to the ruler fixing portion 24. Tightening a ruler fixing screw 24a can fix the parallel ruler in position relative to the ruler fixing portion 24. Therefore the parallel ruler can be mounted to the rear surface of the unit support member 22. The trimmer 1 can be moved in the state that the parallel ruler mounted to the unit support member 22 is kept in contact with the edge of the workpiece W This enables the trimmer 1 to move parallel while a cutting depth of the working tool 12 into the edge of the workpiece W being maintained to be constant. Therefore, the edge cutting operation can be accurately rapidly performed.

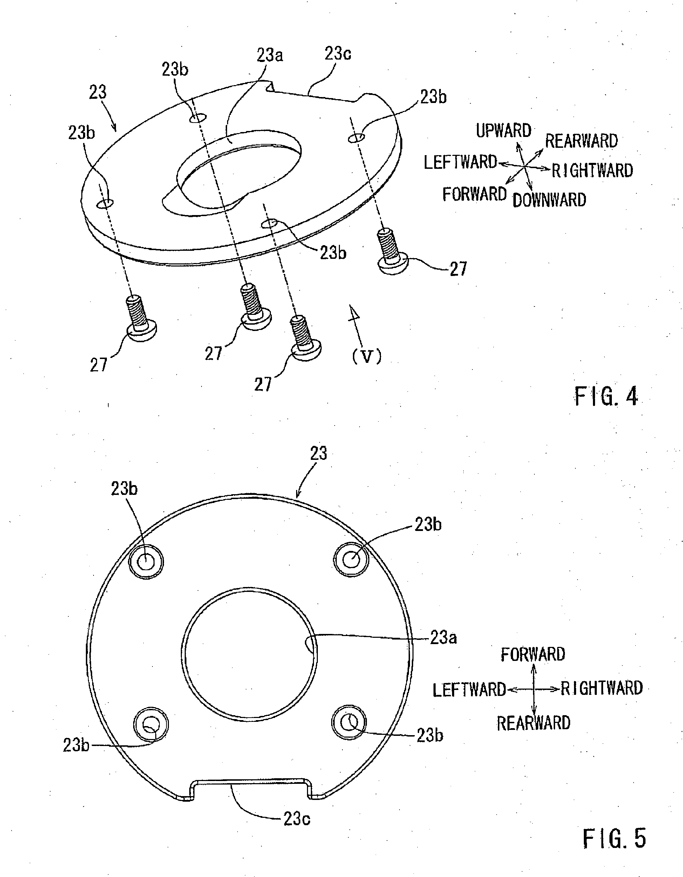

The annular base 23 is designed for use when a normal machining operation is preformed. In this example, the working tool 12 that is directly mounted to the spindle 11 performs the normal machining operation. The annular base 23 can be removed from the lower surface of the base mount 21. FIGS. 4 and 5 show the annular base 23 after being removed. The annular shape of the annular base 23 is substantially the same in size and configuration as the annular shape of the base mount 12. Preferably, the annular base 23 may be molded by resin, so that the annular base 23 may not cause damage to the workpiece W At the central portion of the annular base 23, there is formed a relief hole 23a that has substantially the same diameter as the relief hole 21c c of the mount base 21. A rectangular relief recess 23c is formed in the rear portion of the annular base 23 in order to prevent potential interference with the ruler fixing screw 24a.

The annular base 23 is mounted to the lower surface of the base mount 21 by using four fixing screws 27 (see FIG 4). For inserting the fixing screws 27, screw insertion holes 23b are formed in the annular base 23 at four positions around the relief hole 23a. The screw insertions holes 23b are configured as counter bores having stepped surfaces. As shown in FIG 5, the stepped surfaces of the screw insertion holes 23b are positioned on the side of the lower surface of the annular base 23. Four threaded holes 21d are formed in the lower surface of the base mount 21 at four positions corresponding to the positions of the screw insertion holes 23b. In FIG 2, only two threaded holes 21d positioned on the front side are shown. In order to mount the annular base 23 to the base mount 21, the fixing screws 27 are inserted into the screw insertions holes 23b from the lower side of the annular base 23 and are then engaged with and tightened into the threaded holes 21d of the base mount 21.

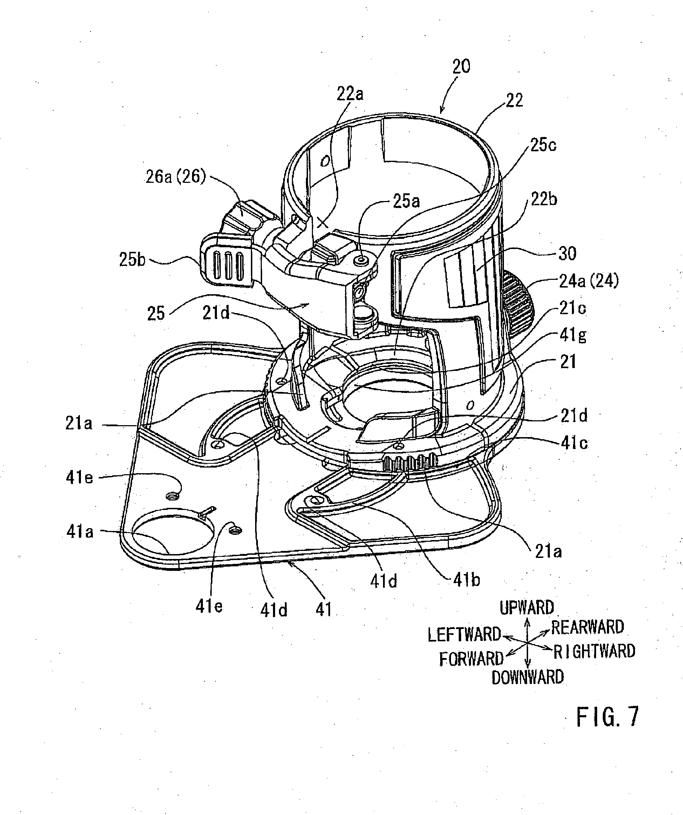

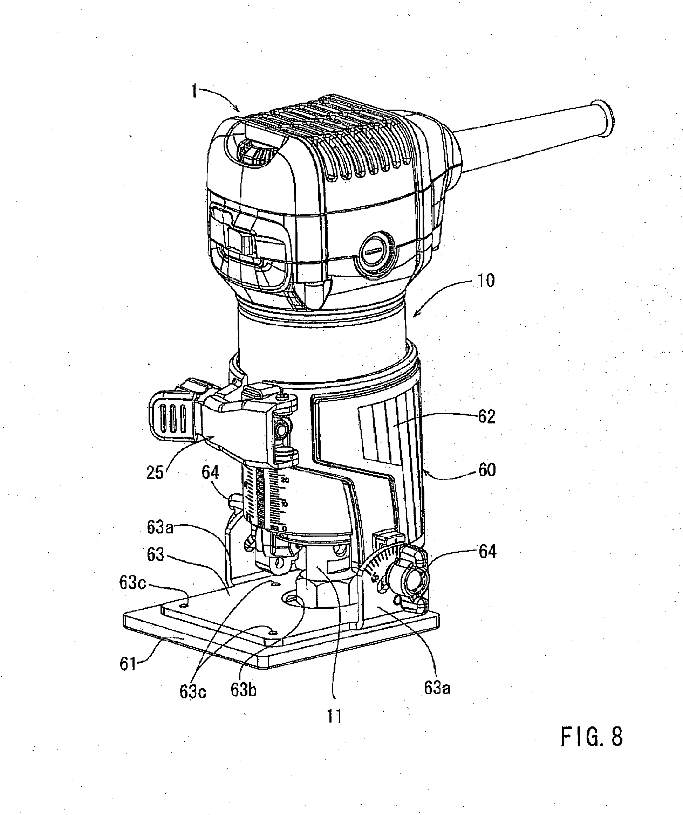

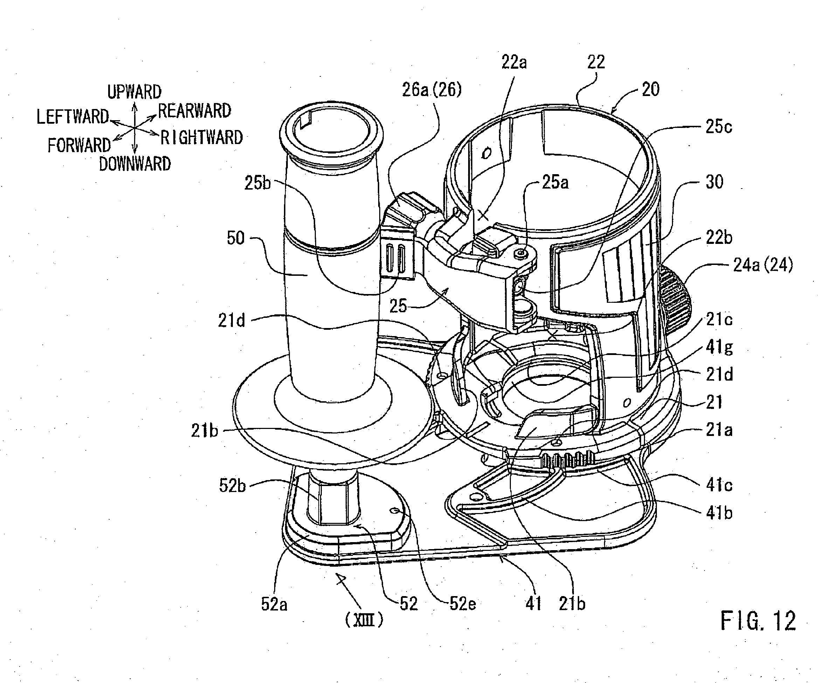

The annular base 23 can be removed from the base mount 21 by loosening the four fixing screws 27. The trimmer 1 of this example is designed to enable mounting of a rectangular base 61 of a tiltable base assembly 60 as shown in FIG 8 in place of the annular base 23 that is used for a normal machining operation. In addition, it is also possible to mount an offset base 41 of an offset base assembly 40 shown in FIG 7 to the base mount 21. As shown in FIG 12, an auxiliary grip 50 may be mounted to the offset base 41.

FIG 8 shows the tool unit 10 to which the tiltable base assembly 60 has been mounted instead of the base assembly 20. The tiltable base assembly 60 has a cylindrical tubular unit support member 62 and a base mount 63 that tiltably supports the unit support member 62. The base mount 63 has a rectangular shape and includes a pair of support walls 63a disposed on opposite sides with respect to the left and right direction. The support walls 63a tiltably support the lower portion of the unit support member 62 from opposite sides, so that the unit support member 62 can be tilted relative to the base mount 63 by an angle of about 45° both in the forward direction and the rearward direction. Tightening fixing screws 64 can fix the tilt position of the body support 62. At the central position of the base mount 63, a relief hole 63b is formed to allow passage of the spindle 11 and allow the working tool 12 to extend downward through the relief hole 63b. Threaded holes 63c are formed in the base mount 63 at four corners around the relief hole 63b. The rectangular base 61 (substantially square shape in this example) has screw insertions holes (not shown), so that the rectangular base 61 can be mounted to the base mount 63 by inserting fixing screws into the screw insertion holes of the rectangular base 61 from the lower side and engaging with and tightening into the threaded holes 63c of the base mount 63. The fixing screws may be the same as the fixing screws 27 shown in FIG. 4. In this way, the rectangular base 61 can be mounted to the base mount 63 in such a manner that the upper surface of the base 61 contacts the lower surface of the base mount 63 in a face-to-face contact relationship therewith. The rectangular base 61 has a relief hole 61a having substantially the same diameter as the diameter of the relief hole 63b of the base mount 63. The rectangular base 61 can be removed from the base mount 63 by loosening the fixing screws.

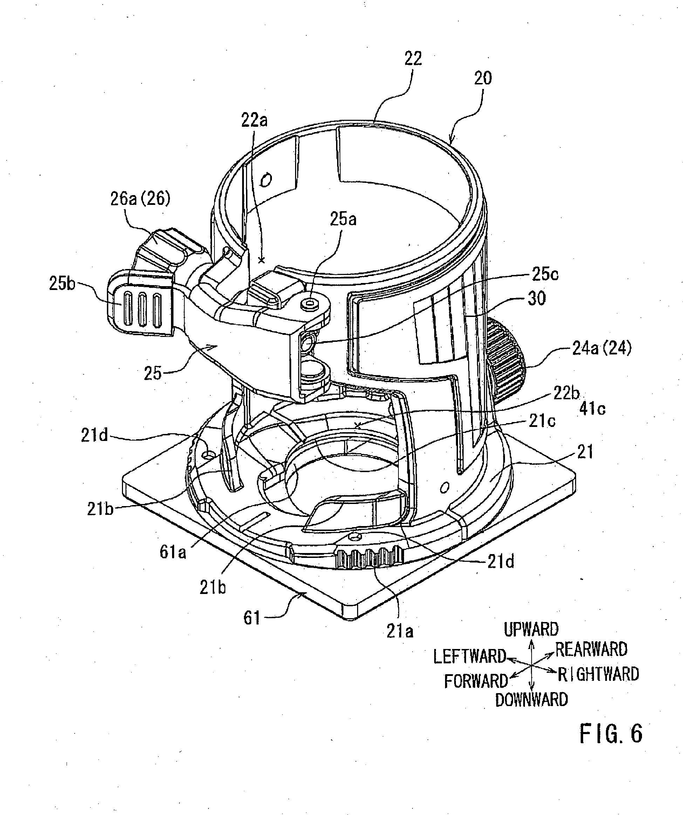

As shown in FIG. 6, the rectangular base 61 can be also mounted to the base mount 21 of the unit support member 22 that is not used for an inclined machining operation but is used for the normal machining operation. To this end, the relief hole 61a is configured to align with the relief hole 21c of the base mount 21.

The rectangular base 61 can be fixed in position relative to the mount base 21 by inserting the fixing screws into the screw insertion holes of the rectangular base 61 and engaging with and tightening into the threaded holes 21d at four positions. Therefore, the distance (pitch) between the threaded holes 21d coincides with the distance (pitch) between the threaded holes 63c of the mount base 63.

By mounting the rectangular base 61 to the base mount 21 of the unit support member 22 in place of the annular base 23, for example, any one of the edges of the base 61 can be used as a parallel ruler. This enables to accurately rapidly move the trimmer 1, and therefore, it is possible to efficiently perform the machining operation.

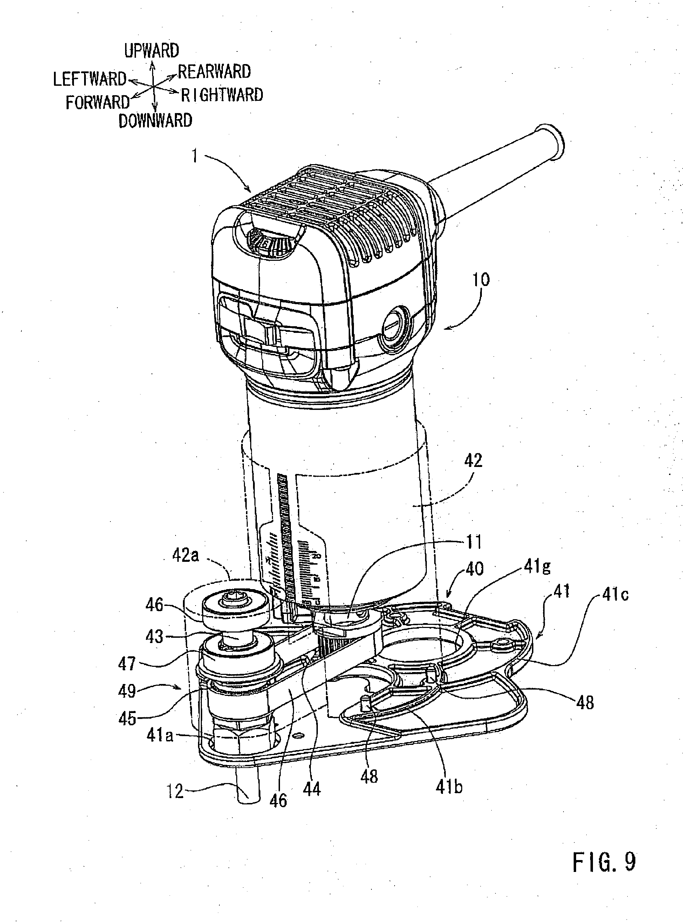

FIG. 9 shows the trimmer 1 to which the offset base assembly 40 has been mounted in place of the base assembly 20. The offset base assembly 40 includes a unit support member 42. The offset base 41 is mounted to the lower end of the unit support member 42.

The unit support member 42 corresponds to the unit support member 22 used for the normal machining operation and has a cylindrical tubular configuration for holding the tool unit 10 therein. The unit support member 42 may have a clamp device (not shown) that is similar to the clamp device 25 of the unit support member 22.

An offset mechanism 49 is disposed on the front side of the unit support member 42. The offset mechanism 49 includes an offset case 42a integrated with the front portion of the unit support member 42. An offset shaft 43 is rotatably supported within the offset case 42a via bearings 46 and 47.

In the case that the offset assembly 40 having the offset mechanism 49 is used, the working tool 12 is removed from the spindle 11, and a drive pulley 44 is mounted to the spindle 11 in place of the working tool 12. A driven pulley 45 is mounted to the offset shaft 43. A drive belt 46 is wound around the drive pulley 44 and the driven pulley 45 to extend therebetween. The working tool 12 may be mounted to the lower end of the offset shaft 43. In this way, by using the unit support member 42 of the offset assembly 40, the working tool 12 can be mounted to the offset shaft 43 that is offset from the spindle 11 of the tool unit 10.

When the motor of the tool unit 10 is started, the rotation of the motor is transmitted to the spindle 11 and is then transmitted to the offset shaft 43 via the drive belt 46. The drive pulley 44 and the driven pulley 45 may be toothed pulleys, and the drive belt 46 may be a toothed belt engaging the toothed pulleys. In this way, the working tool 12 attached to the offset shaft 43 rotates at a position offset from the spindle 11 and protrudes downward from the offset base 41 via a relief hole 41a formed in the front portion of the offset base 41.

By using the offset base assembly 40, it is possible to perform an edge cut operation at a position near a wall of a building or the like, where it is difficult to move the tool unit 10 into or toward a portion to be machined, or it is difficult to perform a trimming operation within a narrow space.

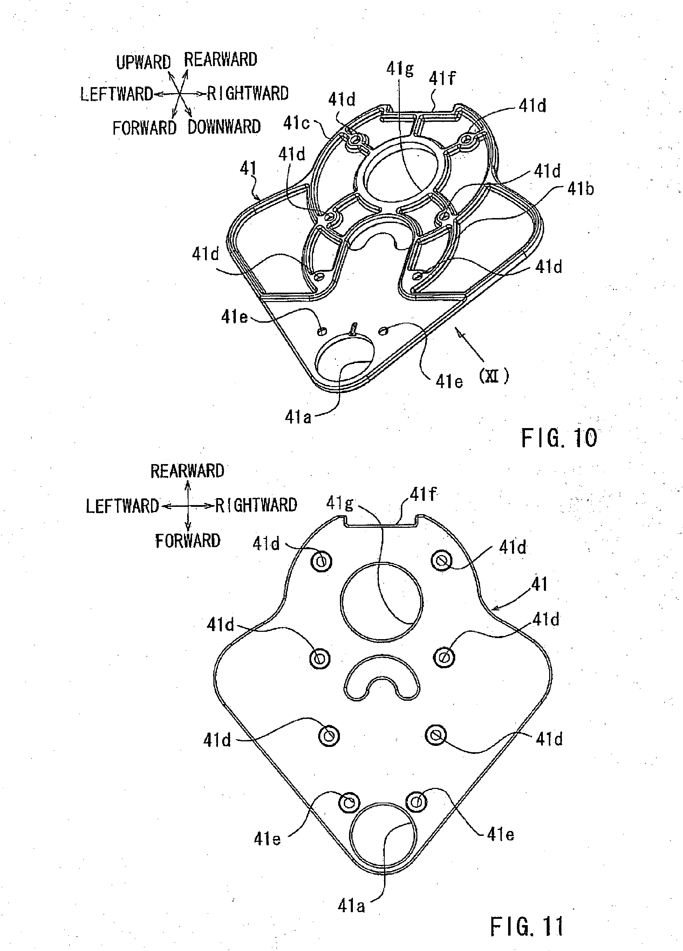

The unit support member 42 of the offset base assembly 40 is mounted to a mount portion 41b of the offset base 41 by using four fixing screws 48. By loosening the fixing screws 48, the unit support member 42 and the offset mechanism 49 including the offset shaft 43 can be removed from the offset base 41. FIGS. 10 and 11 show the offset base 41 removed from the unit support member 42.

As shown in FIGS. 10 and 11, the offset base 41 may be a flat plate that has a front portion and a rear portion having a triangular shape and a semicircular shape in plan view, respectively. The surface area and the shape of the offset base 41 are set to be as large as possible but not so much large as causing the unit support member 42 including the offset case 42a to extend laterally beyond the offset base 41. The mount portion 41b for mounting the unit support member 42 has a substantially circular shape and is formed on a substantially central portion of the upper surface of the offset base 41. A substantially circular mount portion 41c for mounting the unit support member 22 used for the normal machining operation is formed on the upper surface of the offset base 41 at a position on the rear side (upper side as viewed in FIG 11) of the mount portion 41b.

A relief hole 41g is formed at the central part of the mount portion 41c. The relief hole 41g is configured to correspond to the relief hole 23a of the annular base 23. As will be explained later, when the unit support member 22 used for the normal machining operation is mounted to the mount portion 41b, the relief hole 21c of the base mount 21 may be positioned to align with the relief hole 41g. Therefore, the spindle 11 may extend through both of the relief holes 21c c and 41 g, and hence, the working tool 12 may be passed downwardly through these holes to extend downward from the offset base 41.

The mount portion 41b positioned centrally and used for the offset machining operation and the mount portion 41c positioned on the rear side are formed to be partly overlapped with each other. Four screw insertion holes 41d configured as counter bores are formed in each of the mount portions 41b and 41c. Because the mount portions 41b and 41c are partly overlapped with each other, two of the screw insertion holes 41d are shared with both of the mount portions 41b and 41c. Therefore, the screw insertion holes 41d are six in total, while the centrally positioned two screw insertion holes 41d are adapted to be shared with both of the mount portions 41b and 41c.

The offset base 41 further includes two thread insertion holes 41e configured as counter bores and positioned on the rear side of the relief hole 41a. Further, at the rear end of the offset base 41, a relief recess 41f is formed in order to prevent potential interference with the ruler fixing screw 24a of the ruler fixing portion 24.

As shown in FIG. 7, the offset base 41 can be mounted to the lower surface of the base mount 21 of the unit support member 22 in place of the annular base 23. More specifically, the unit support member 22 is mounted to the mount portion 41c provided at the rear portion of the offset base 41. In this case, four fixing screws that may be the same as the fixing screws 27 shown in FIG. 4 are inserted into the screw insertion holes 41d of the mount portion 41c and are then engaged with and tightened into the threaded holes 21d of the base mount 21, so that the unit support member 22 can be mounted to the upper surface of the offset base 41. To this end, the screw insertion holes 41d are spaced from each other by a distance that is the same as the distance between the threaded holes 21d of the base mount 21.

In this way, the offset base 41 having a larger surface area than the annular baser 23 may be mounted to the base mount 21 in place of the annular base 23, so that it is possible to move the tool unit 10 while the tool unit 10 being held in a more stable position. Therefore, it is possible to rapidly and easily perform an edge cutting operation or other operations of the workpiece W

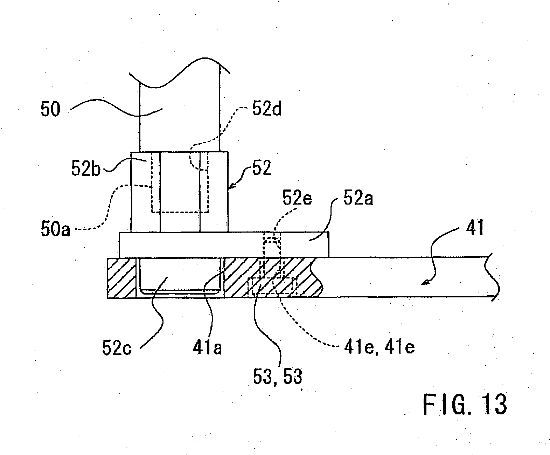

In the case that the offset base 41 is mounted to the unit support member 22, the auxiliary grip 50 can be mounted to the offset base 41. Thus, as shown in FIG 12, the auxiliary grip 50 can be mounted to the front portion of the offset base 41 via an attachment 52 that is shown in detail in FIG. 13. The attachment 52 includes a contact plate portion 52a for contacting with an upper surface of the offset base 41, a base portion 52b positioned on the upper side of the contact plate portion 52a, and a support projection 52c positioned on the lower side of the contact plate portion 52a. The support projection 52c can be substantially closely inserted into the relief hole 41a formed in the front portion of the offset base 41, so that the base portion 52b contacts the upper surface of the offset base 41. Two threaded holes 52e are formed in the base portion 52b. Fixing screws 53 can be inserted into the thread insertion holes 41e formed on the rear side of the relief hole 41a so as to be engaged with and tightened into the threaded holes 52e, so that the attachment 52 can be fixed in position relative to the offset base 41.

A threaded hole 52d is formed in the central portion of the upper surface of the base portion 52b. The auxiliary grip 50 has a threaded shaft 50a that can be threadably engaged with and tightened into the threaded hole 52d, so that the auxiliary grip 50 can be mounted to the offset base 41 to extend upwardly therefrom. In this way, the auxiliary grip 50 can be mounted to the offset base 41, so that the axils the auxiliary grip 50 coincides with the axis of the relief hole 41a that is coaxial with the offset shaft 43.

A sub-handle used for a hammer drill and a driver drill, etc. can be used as the auxiliary grip 50. Thus, a sub-handle removed from the other tool than the trimmer 1 may be mounted to the offset base 41 via the attachment 52, so that the sub-handle can be used as the auxiliary grip 50. In particular, in the case of the auxiliary grip 50 shown in FIG 12, the vertical height of the base portion 52b may be determined such that the auxiliary grip 50 can be grasped with a hand at substantially the same height as the height of the other hand that grasps the unit support member 22. Therefore, when the operator grasps the auxiliary grip 50 with one hand and grasps the unit support member 22 with the other hand, both hands may be positioned at substantially the same height. Hence, the auxiliary grip 50 and the unit support member 22 can be grasped by applying substantially the same grasping force to them. As a result, the operator can perform a machining operation while he or she takes a comfortable position.

With the trimmer 1 of the above example, the bases 23, 41 and 61 adapted to contact with the workpiece W and having different shapes from each other can be selectively exchangeably mounted to the unit support member 22 according to the machining work to be performed. Therefore, it is possible to efficiently perform the machining work and to reduce the manufacturing cost because the unit support member 22 can be used for any of the bases 23, 41 and 61.

Further, as the bases that are different from the normally used annular base 23, the rectangular base 61 of the tiltable base assembly 60 and the offset base 41 of the offset base assembly 40 may be used. Therefore, the rectangular base 61 or the offset base 41 can be effectively used even in the case that the tiltable base assembly 60 and the offset base assembly 40 are not used.

For example, by mounting the rectangular base 61 in place of the normally used annular base 23, the rectangular base 61 can be used as a parallel ruler, enabling the machining operation to be accurately rapidly performed. If the offset base 41 is used in place of the annular base 23, it is possible to also use the offset base 41 as a parallel ruler and to move the tool unit 10 in the state that the tool unit 10 is held in stable because the surface area of the offset base 41 is larger than that of the annular base 23. Therefore, the accurate and rapid machining operation can be easily performed.

In particular, in the case that the offset base 41 is used, it is possible to mount the auxiliary grip 50 to the offset base 41. Therefore, the operator can move the trimmer 1 while he or she holds the position of the trimmer 1 with both hands. Hence, accurate and rapid machining operations can be further easily performed.

The above example may be modified in various ways. In the above example, the offset base 41 has two mount portions 41b and 41c. The unit support member 42 having the offset mechanism can be mounted to the mount portion 41 b that is positioned centrally, and the unit support member 22 for the normal machining operation can be mounted to the mount portion 41c that is positioned on the rear side.

Further, although the offset base 41 is configured as a flat plate having a triangular front portion and a semicircular rear portion, the offset base 41 may have a rectangular shape or any other shape.

## Claims

1. A power tool (1) comprising:
a tool unit (10) having a rotary spindle (11);
**characterised by** a plurality of unit support members (22, 42, 62) configured to support the tool unit (10);
a plurality of bases (23, 41, 61) for contacting with a workpiece (W), the bases (23, 41, 61) having different shapes from each other; and
a mechanism (27) configured to enable the bases (23, 41, 61) to be selectively mounted to a unit support member (22),
wherein:
the bases include a first base (23, 61) and a second base (41);
the tool unit (10) can constitute a first configuration of the power tool by combining the tool unit (10) with a unit support member (22, 62) and the first base (23, 61);
the tool unit can constitute a second configuration of the power tool by combining the tool unit (10) with an other unit support member (42) and the second base (41);
the other unit support member (42) includes an offset shaft (43) and a transmission mechanism (46) for transmitting rotation of the spindle (11) to the offset shaft (43);
the offset shaft (3) is positioned to be offset from the spindle (11) and is configured to be able to mount a working tool (12); and
the second base (41) includes a relief hole (41a) for permitting passage of the offset shaft (43), the relief hole (41a) is configured to be able to hold a part (52c) of a grip member (50) when the second base (41) is mounted to a unit support member (22, 62), and the grip member (50) is capable of being grasped by an operator.

2. The power tool according to claim 1, wherein:
the unit support member (22) is configured to non-tiltably support the tool unit (10); or
the unit support member (62) is configured to tiltably support the tool unit (10).

3. The power tool according to claim 1 or 2, wherein the first base (23) has a circular shape or the first base (61) has a rectangular shape.

4. The power tool (1) according to claim 3, wherein the rectangular base (61) is usable as a base of a tiltable base assembly (60).

5. The power tool (1) according to any one of claims 1 to 4, wherein:
the tool unit (10) further includes an electric motor that rotatably drives the spindle (11),
the unit support member (22) includes a base mount (21) to which the base is detachably mounted;
a working tool (12) mounted to the spindle (11) can protrude downwardly from the base for machining the workpiece when the tool unit (10) is supported by the unit support member (22).

## Patentansprüche

1. Kraftwerkzeug (1), mit
einer Werkzeugeinheit (10), die eine drehende Spindel (11) aufweist,
**gekennzeichnet durch**
eine Mehrzahl von Einheitslagerungsbauteilen (22, 42, 62), die zum Lagern der Werkzeugeinheit (10) konfiguriert sind,
eine Mehrzahl von Basen (23, 41, 61) zum Berühren mit einem Werkstück (W), bei dem die Basen (23, 41, 61) unterschiedliche Formen untereinander aufweisen, und
einen Mechanismus (27), der dazu konfiguriert ist, es den Basen (23, 41, 61) zu ermöglichen, selektiv an ein Einheitslagerungsbauteil (22) montiert zu werden,
bei dem
die Basen eine erste Basis (23, 61) und eine zweite Basis (41) enthalten,
die Werkzeugeinheit (10) eine erste Konfiguration des Kraftwerkzeuges **durch** Kombinieren der Werkzeugeinheit (10) mit einem Einheitslagerungsbauteil (22, 62) und der ersten Basis (23, 61) bilden kann,
die Werkzeugeinheit eine zweite Konfiguration des Kraftwerkzeuges **durch** Kombinieren der Werkzeugeinheit (10) mit einem anderen Einheitslagerungsbauteil (42) und der zweiten Basis (41) bilden kann,
das andere Einheitslagerungsbauteil (42) eine versetzte Welle (43) und einen Übertragungsmechanismus (46) zum Übertragen der Drehung der Spindel (11) an die versetzte Welle (43) enthält,
die versetzte Welle (43) so positioniert ist, dass sie von der Spindel (11) versetzt ist, und dazu konfiguriert ist, dass sie ein Arbeitswerkzeug (12) montiert haben kann, und
die zweite Basis (41) ein Aussparungsloch (41 a) zum Ermöglichen des Durchführens der versetzten Welle (43) enthält, wobei das Aussparungsloch (41a) dazu konfiguriert ist, einen Teil (52c) eines Griffbauteils (50) halten zu können, wenn die zweite Basis (41) an ein Einheitslagerungsbauteil (22, 62) montiert ist, und das Griffbauteil (50) **durch** einen Benutzer gegriffen werden kann.

2. Kraftwerkzeug nach Anspruch 1, bei dem
das Einheitslagerungsbauteil (22) dazu konfiguriert ist, die Werkzeugeinheit (10) nicht neigbar zu lagern, oder
das Einheitslagerungsbauteil (62) dazu konfiguriert ist, die Werkzeugeinheit (10) neigbar zu lagern.

3. Kraftwerkzeug nach Anspruch 1 oder 2, bei dem die erste Basis (23) eine kreisförmige Form aufweist oder die erste Basis (61) eine rechteckige Form aufweist.

4. Kraftwerkzeug (1) nach Anspruch 3, bei dem die rechteckige Basis (61) als eine Basis einer neigbaren Basisbaugruppe (60) verwendet werden kann.

5. Kraftwerkzeug (1) nach einem der Ansprüche 1 bis 4, bei dem
die Werkzeugeinheit (10) weiter einen elektrischen Motor enthält, der drehend die Spindel (11) antreibt,
das Einheitslagerungsbauteil (22) eine Basishalterung (21) enthält, an welche die Basis lösbar montiert ist,
ein Arbeitswerkzeug (12), das an die Spindel (11) montiert ist, nach unten von der Basis zum Bearbeiten des Werkstückes vorstehen kann, wenn die Werkzeugeinheit (10) durch das Einheitslagerungsbauteil (22) gelagert ist.

## Revendications

1. Un outil motorisé (1) comprenant :
un bloc outil (10) muni d'un axe rotatif (11) ;
**caractérisé par** une pluralité d'éléments de soutien de bloc (22, 42, 62) configurés pour soutenir le bloc outil (10) ;
une pluralité de bases (23, 41, 61) destinées à être en contact avec une pièce de travail (W), les bases (23, 41, 61) présentant chacune des formes différentes l'une de l'autre ; et
un mécanisme (27) configuré pour permettre aux bases (23, 41, 61) d'être montées de manière sélective sur un élément de soutien de bloc (22),
dans lequel :
les bases comprennent une première base (23, 61) et une seconde base (41) ;
le bloc outil (10) peut constituer une première configuration de l'outil motorisé par combinaison du bloc outil (10) avec un élément de soutien de bloc (22, 62) et la première base (23, 61) ;
le bloc outil peut constituer une deuxième configuration de l'outil motorisé par combinaison du bloc outil (10) avec un autre élément de soutien de bloc (42) et la deuxième base (41) ;
l'autre élément de soutien de bloc (42) comprend un arbre de décalage (43) et un mécanisme de transmission (46) pour la transmission d'une rotation de l'axe (11) à l'arbre de décalage (43) ;
l'arbre de décalage (3) est positionné de manière à être décalé par rapport à l'axe (11) et est configuré pour permettre le montage d'un outil de travail (12) ; et
la deuxième base (41) comprend un trou de délestage (41a) pour permettre un passage de l'arbre de décalage (43), le trou de délestage (41a) est configuré pour être capable de maintenir une partie (52c) d'un élément de préhension (50) quand la deuxième base (41) est
montée à un élément de soutien de bloc (22, 62), et l'élément de préhension (50) est capable d'être saisi par un opérateur.

2. L'outil motorisé selon la revendication 1, dans lequel :
l'élément de soutien de bloc (22) est configuré pour soutenir de manière non inclinable le bloc outil (10) ; ou
l'élément de soutien de bloc (62) est configuré pour soutenir de manière inclinable le bloc outil (10).

3. L'outil motorisé selon la revendication 1 ou 2, dans lequel la première base (23) présente une forme circulaire ou la première base (61) présente une forme rectangulaire.

4. L'outil motorisé (1) selon la revendication 3, dans lequel la base rectangulaire (61) est utilisable comme une base d'un assemblage de base inclinable (60).

5. L'outil motorisé (1) selon l'une quelconque des revendications 1 à 4, dans lequel :
le bloc outil (10) comprend en outre un moteur électrique qui entraîne en rotation l'axe (11),
l'élément de soutien de bloc (22) comprend un montage de base (21) auquel la base est montée de manière détachable ;
un outil de travail (12) monté sur l'axe (11) peut dépasser vers l'avant depuis la base pour usiner la pièce de travail quand le bloc outil (10) est soutenu par l'élément de soutien de bloc (22).
